Europäisches Patentamt

European Patent Office

Office européen des brevets

(11) Publication number: **0 219 140**
**A2**

(12) **EUROPEAN PATENT APPLICATION**

(21) Application number: 86200825.7

(22) Date of filing: 13.05.86

(51) Int. Cl.⁴: **F01D 5/22** , F16B 4/00

(30) Priority: 15.10.85 US 787548

(43) Date of publication of application:
22.04.87 Bulletin 87/17

(84) Designated Contracting States:
DE FR GB IT NL

(71) Applicant: **The Boeing Company**
**P.O. Box 3707**
**Seattle Washington 98124(US)**

(72) Inventor: **Schedin, Robert Wilen**
**6802 Marine View Drive**
**Edmonds Washington 98020(US)**

(74) Representative: **Holjtink, Reinoud et al**
**OCTROOIBUREAU ARNOLD & SIEDSMA**
**Sweelinckplein 1**
**NL-2517 GK Den Haag(NL)**

(54) **Single piece shroud for turbine rotor.**

(57) A single piece, annular shroud is attached by shrink fit to each tip of the radially projecting rotor blades of a rotor. The shroud raises the first mode excitation frequency of the rotor to above its operating range. In addition, the shroud applies a compressive pre-stress force to the rotor, thereby reducing overall rotor stress levels.

Fig.1

## SINGLE PIECE SHROUD FOR TURBINE ROTOR

Background of the Invention

The present invention is directed to the fluid driven turbine art and, in particular, to a method for raising the first mode excitation frequency of a turbine rotor by attaching a single piece, annular shroud to the tips of each rotor blade.

Numerous turbine configurations are known to the prior art. Turbines are commonly employed to convert a fluid flow to rotation of a drive shaft. A particular application for a turbine is in the testing of fans, pumps or propellers for use in aircraft or other aerospace applications. Ideally, the propeller or fan under test should be driven at speeds normally expected in its intended application. Further, the test structure behind the fan or propeller should be aerodynamically similar to the structure encountered in the actual application, such that flow patterns past the fan or propeller can be simulated. In addition, the drive source to the fan or propeller should be sufficiently quiet such that noise levels produced by the fan or propeller can be accurately measured.

Heretofore, the drives for testing fans and propellers have suffered from numerous deficiencies. For example, hot gas turbine drives have been used in fan and propeller testing, but the size of the hot gas turbines required to drive the fans or propellers to realistic levels has been so large that such turbines have blocked airflow behind the fan or propeller, thereby obstructing airflow measurements. In addition, hot gas turbines are noisy, tending to mask the noise from the fan or propeller under test.

A further problem associated with hot gas turbines is that they are designed to operate within a specific RPM range and do not provide a high output for speeds "off" this range. As such, the use of hot gas turbines has proved inappropriate for testing fans or propellers over their entire operating range.

Additionally, electric motors have been employed in propeller and fan testing. Again, however, the electric motors required to drive fans and propellers to realistic levels have been so large that they, also, block airflow behind the fan or propeller. While attempts have been made in locating the motor in an adjacent room and routing drive shafts with gearing to the propeller, the losses encountered in such constructions have proved intolerable.

A particular problem with most turbine and compressor systems is that the blading is excited at one or more of its natural frequencies by the wakes or pressure fields of adjacent stators. These natural excitation modes often occur within the normal operating range of the machine, requiring that the unwanted blade excitations be tailored by various design techniques so that they occur at an engine speed of transient operation only, allowing a limited number of high amplitude cycles to accumulate over the life of the rotor to thereby minimize the resulting fatigue problem. None of the techniques known to the prior art for eliminating excitation modes of the rotor is applicable to turbine designs which operate over a wide design speed range, without significantly reducing the efficiencies of the turbine design.

Also, turbines operating at high speeds produce high centrifugal force loading on the rotor hub, thereby requiring heavier hub designs or, alternatively, resulting in earlier fatigue failures.

Summary of the Invention

The present invention is directed to a method for raising the first mode excitation frequency of a rotor by attaching a single piece, annular shroud to the tips of each rotor blade. In addition, the shroud introduces a compressive pre-stress to the rotor, thereby reducing rotor operating stress levlels.

Briefly, according to the invention, the method for raising the first mode excitation frequency of a rotor, having an annular hub with a plurality of rotor blades projecting radially therefrom, above the operating range of the rotor includes the first step of providing a predeterminedly configured, single piece annular shroud. The shroud has a predetermined inner diameter adapted to be secured to the tips of the rotor blades. The shroud is then secured to the rotor such that the shroud contacts the tips of each of the rotor blades.

The shroud is preferably provided with an inner diameter which is predeterminedly less than the radius of the rotor blades when the shroud and rotor are at the same temperature. The shroud is heated to a predetermined temperature above the temperature of the rotor to thereby predeterminedly increase the inner diameter of the shroud. The shroud is then positioned in alignment about the rotor tips and cooled such that the shroud and rotor form a shrink fit assembly.

Preferably, the shroud is provided with a recessed annular groove in its inner surface, with the groove being of predetermined dimension to receive, and form the shrink fit with the rotor blades.

Brief Description of the Drawings

FIGURE 1 is an exploded, perspective cutaway view illustrating the rotor and stator configurations of the preferred embodiments of a two-stage turbine;

FIGURE 2 is a cross-sectional view of the second rotor and illustrates the preferred embodiment of the inventive shroud;

FIGURES 3A-3D are cross-sectional contour drawings illustrating the preferred construction of the stator and rotor blades;

FIGURE 4 is a velocity diagram illustrating fluid flow through the preferred embodiment of the two-stage turbine;

FIGURE 5 is graph illustrating the horsepower output vs. RPM for the preferred two-stage turbine design; and

FIGURES 6A and 6B are graphs illustrating horsepower and inlet pressure, respectively, vs. airflow for the preferred embodiment of the two-stage turbine.

Detailed Description

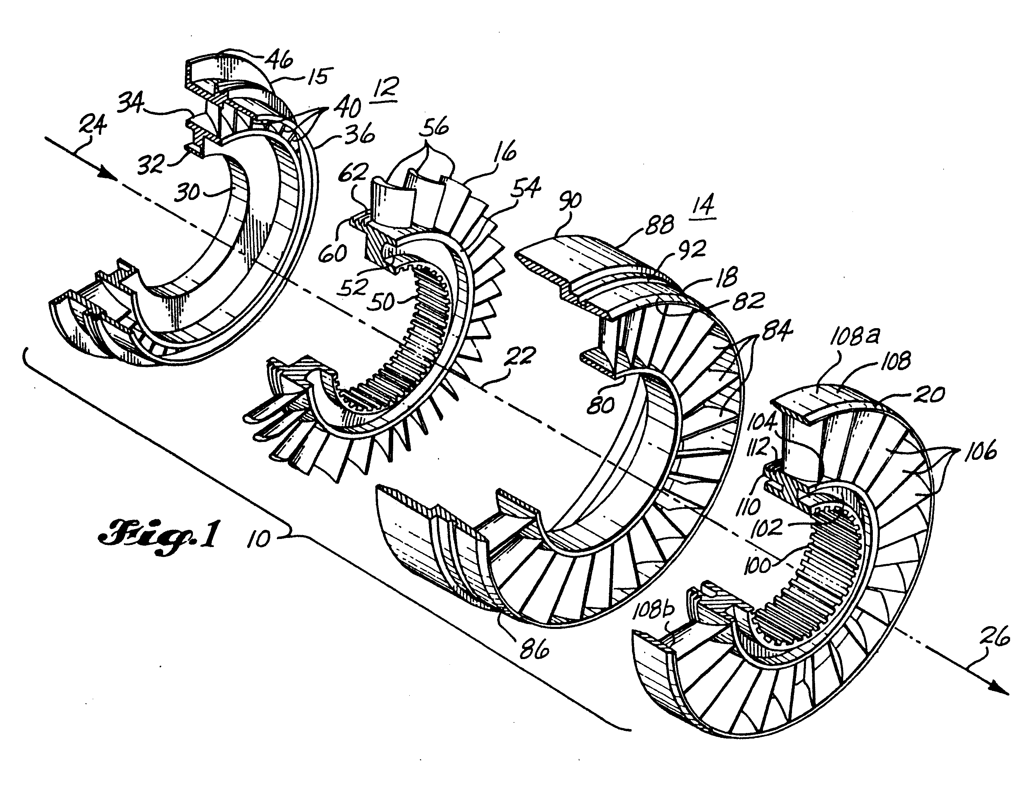

FIGURE 1 is an exploded, perspective cutaway view illustrating the components of a two-stage turbine, indicated generally at 10. These components include a first stage 12, comprised of a first stator 15 and a first rotor 16, and a second stage 14, comprised of a second stator 18 and a second rotor 20. The drive fluid, which, in the case of the preferred embodiment, is cold, compressed air, is passed through the longitudinal axis 22 of the turbine, being input to the first stator as indicated by arrow 24 and being passed from the output of the second rotor as indicated by arrow 26.

The first stator 14 is comprised of an inner annular ring 30 having a forward projecting flange 32 on its inside surface and the inner one 34 of concentric rims 34, 36, contiguous to its outer surface. The forward projecting flange 32 is provided to form a sump return path to lubricating oil for bearings (not shown) which support a drive shaft (not shown) in the preferred embodiment.

Situated between the inner and outer rims 34, 36 are a plurality of radial blades 40. As shown more clearly with respect to FIGURE 3A, the blades 40 have elliptical forward and trailing edges, and are formed with a radius of curvature to divert the incoming air, as indicated by arrow 24, to a desired angle.

Formed on the outside perimeter of rim 36 are a pair of circumferential supports 42 which receive an O-ring seal (not shown). The O-ring seal bears against the underside lip of the second stator - (discussed hereinbelow) to prevent the escape of compressed air.

Formed at the forward edge of the outer rim 36 is an annular facing flange 46 which, via a suitable O-ring seal (not shown) forms an airtight seal between the plenum housing (not shown) for the turbine and the first stator 14.

The diverted drive air from the first stator 15 is passed to the first rotor 16. The first rotor 16 has an inner annular hub 50 which is axially splined to mate with corresponding splines on the drive shaft (not shown).

Contiguous with the outer surface of hub 50 is an annular ring 52 which connects at its outside periphery to an annular rim 54. Projecting radially from the outer surface of rim 54 are a plurality of rotor blades 56. As shown more clearly with respect to FIGURE 3B, the rotor blades 56 have elliptical forward and trailing edges, and are formed with a curvature and suitable dimensions to comprise impulse blades.

Projecting from the forward surface of rim 54 is an annular flange 60 which has a series of circumferential seals 62 formed on its outside surface. The seals 62 form a sealing surface against the inside surface of the inner rim 34 of the first stator 14 to thereby prevent leakage of the drive air.

The drive air from the first rotor 16 is routed to the second stator 18 of the second stage 14. Second stator 18 includes concentric inner and outer annular rims 80, 82, respectively. Situated between the inner and outer rims 80, 82 are a plurality of radially aligned stator blades 84. The stator blades 84, which are shown in greater detail with respect to FIGURE 3C, have elliptical leading and trailing edges, and are formed with a curvature designed to direct airflow at a predetermined angle to the second rotor 20. Formed at the trailing edge of the upper surface of the outer rim 82 is a radiused edge 86 designed to form a seal with the outer rim of the second rotor 20, as described below.

An annular flange 88 projects from the forward portion of the outer rim 82 and has a provided under surface for mating with the O-ring (not shown) which rides in the supports 42 on the first stator 15. The forward edge 90 of the flange 88 also forms a sealing contact with the annular facing flange 46 on the first stator 15.

An annular ring 92, having a square cross-section, is provided in the top surface of the outer rim 82 and is designed to support an O-ring (not shown) seal which bears against the plenum supporting structure (not shown).

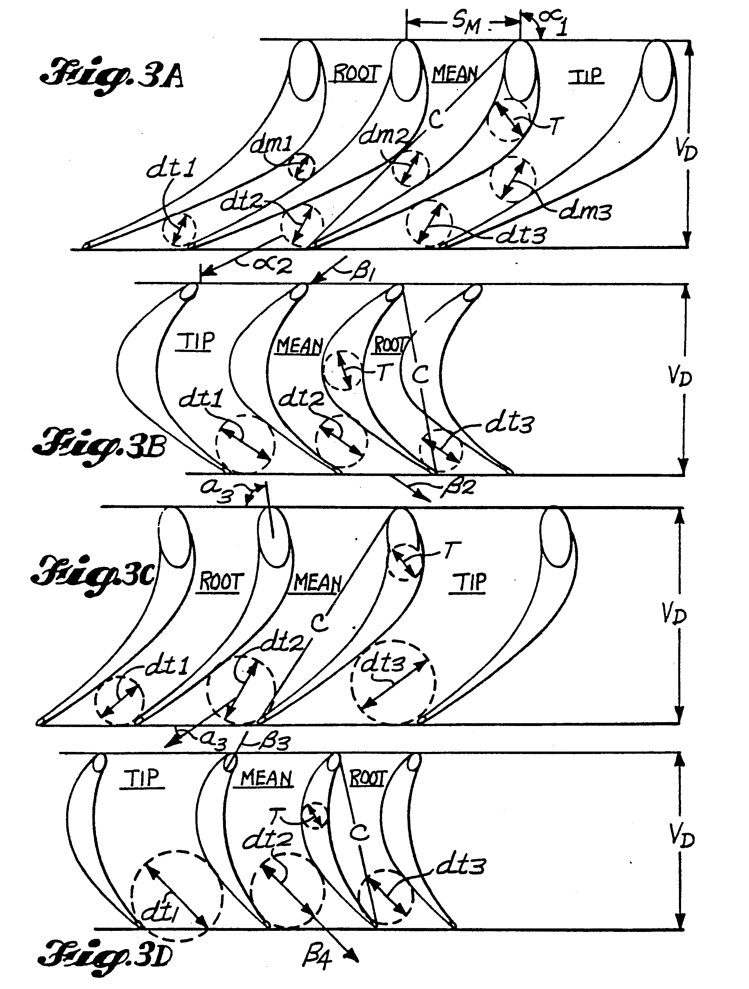

Drive air from the second stator 18 is predeterminedly directed to the second rotor 20. Second rotor 20 includes an inner annular hub 100 which is splined on its inside surface to mate with corresponding splines provided on the drive shaft (not shown). Contiguous with the outer surface of hub 100 is a ring 102 which is connected at its periphery to an annular, concentric rim 104. Projecting in a radial direction from the outer surface of the rim 104 are a plurality of rotor blades 106. The rotor blades 106, as better shown with respect to Figure 3D, have elliptical forward and trailing edges, and are dimensioned to form a reaction stage.

Projecting forward from the rim 104 is an annular flange 110 which has, provided circumferentially on its top surface, a series of seals 112 which are formed to define a seal against the inner surface of the rim 80 of the second stator, thereby preventing leakage of the drive air.

Before implementation of the present invention, the second stage turbine rotor blade 106 first mode excitation frequency occurred at 4,200 RPM, with a second mode at 10,200 RPM. Such excitation is due to the wakes or pressure fields produced at the adjacent stator 18. In prior art designs, certain tailoring could be done to the second rotor blades to prevent excitation over a limited operating range of the turbine. However, in the present two-stage turbine design, the operating speeds range from 0 to 10,000 RPM. Thus, an improved method for eliminating excitation modes within the operating range was developed. This method includes the implementation of an outer shroud 108 which attaches to the periphery of the blades 106.

The shroud 108, as seen in FIGURE 1, is a single piece annular unit having an outer surface 108a and an inner surface 108b, which is adapted to be attached to each tip of the rotor blades 106.

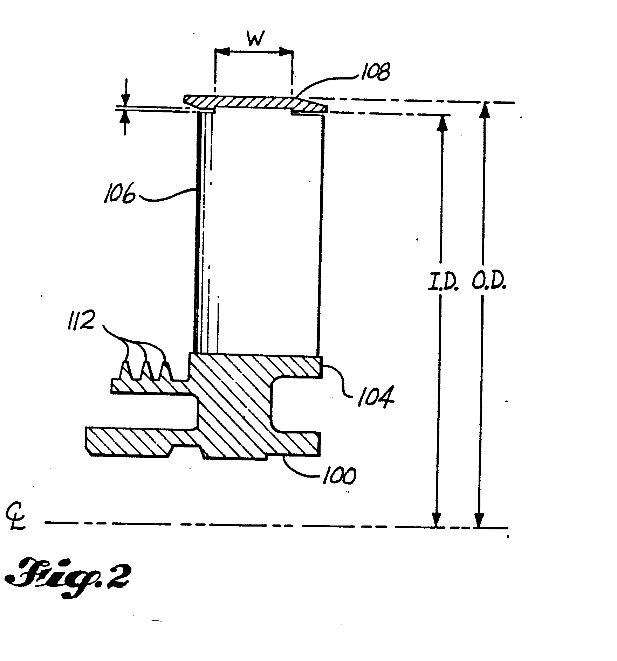

FIGURE 2 is a cross-sectional view of the second rotor 20 and particularly illustrates the attachment of the shroud 108 to the rotor blades 106. Shown is the annular hub 100 to which is attached the annular, concentric rim 104. Also shown are the seals 112 projecting radially from an annular flange 110. Shown in this cross-sectional view is one rotor blade 106 which projects radially from the concentric rim 104. The projecting tip of the rotor blade 106 is provided with a lip 107 which projects beyond the tip of the rotor blade by a predetermined dimension, as described hereinbelow.

The inventive shroud 108, here shown in cross-section, includes an outer surface 108a and an inner surface 108b. Formed in the inner surface 108b of shroud 108 is a recessed annular groove 111. The recessed annular groove 111 has a width w adapted to receive the projecting lip 107 on the rotor blade 106.

The shroud 108 attaches to the rotor 20 by means of a shrink fit. That is, the inner diameter of the shroud, at the recessed annular groove 111, is designed to be a predetermined, incremental diameter less than the diameter from tip to tip of the rotor blades 106. The shroud 108 is then heated to a predetermined temperature above the temperature of the rotor, thereby allowing the shroud to be placed around the rotor blades such that the recessed annular groove 111 is in alignment with the projecting lip 107. The shroud 108 is then cooled, thereby forming a shrink fit to the rotor 20.

While standard design equations can be used to calculate the effect by which a given shroud design will increase the first mode excitation frequency of the rotor assembly 20, empirical testing is required to assure the success of the design.

Another benefit provided by the shroud 108 is that it applies a pre-stress to the blades 106 and hub 100. Without a pre-stress, the centrifugal force acting upon the blades and hub would create higher stress levels, and corresponding fatigue over the normal operating range of the rotor 20. By the use of the shrink fit shroud 108, a compressive stress is applied to the blades 106 and hub 100, whereby, due to centrifugal force upon rotation of the rotor 20, the net force on the blades and hub is effectively reduced, thereby minimizing fatigue, or reducing material requirements.

Thus, the design of a particular shroud 108 for application to a particular rotor 20 must take into account:

(1) The desired interface loads, rotor blades 106 to shroud 108,

(2) The desired compressive pre-stress exerted by the shroud 108 on the rotor 20,

(3) The stress level to be applied to the shroud 108, and

(4) The rotor 20 speed at which the shroud ring 108 might separate from the rotor blades 106.

The preferred embodiment, as illustrated in FIGURE 2, provides a slight clearance fit at both the leading and trailing edges of the rotor blade 106 due to the dimensions of the projecting lip 107 and the recessed annular groove 111. The clearance fit at the trailing edge (right-most side of FIGURE 2) is required to keep from buckling the rotor blades 106, since these blades are at a minimal dimension at the trailing edge. The clearance fit at the leading edge (left-most side of FIGURE 2) defines the left-most side of the projecting lip 107-recessed inner groove 111 interface, and is provided to prevent the shroud 108 from walking off of the blade 106.

In this, the preferred embodiment of the invention, the shroud was formed of a titanium alloy 6AL-4V. The shroud was designed with a diameter 0.01778 cm (.007 inches) smaller than the tip-to-toe diameter of the rotor blades 106 when both the rotor 20 and the shroud 108 are at room temperature. The inner diameter at the surface of the recessed annular groove 111 of the shroud is 18.7770 cm (7.3925 inches), with the outer diameter of the shroud at 19.2024 cm (7.560 inches).

To attach the shroud 108 to the rotor 20, the shroud is heated to a temperature of 315.56 degrees C (600 degrees F), with the rotor 20 chilled to a temperature of -177 degrees C (-350 degrees F). At this temperature differential, the shroud can be positioned around the periphery of the rotor blades 106, with the annular recess groove 111 in alignment with the projecting lip 107 on the blades. Upon return of the rotor 20 and the shroud 108 to room temperature, the aforedescribed shrink fit is formed between the shroud 108 and the rotor 20, thereby forming an integrated unit. It is noted that each rotor blade 106 forms a contacting fit with the shroud 108. The described shroud 108 used in the disclosed embodiment of the rotor assembly 20 raised the first excitation mode frequency of the rotor assembly 20 to well beyond the 10,000 RPM maximum operating speed of the rotor.

In its preferred construction, the two-stage turbine 10 is 19.3 centimeters (7.6 inches) in diameter and 9.4 centimeters (3.7 inches) long. The stators are preferably formed from braised 17-4 stainless steel whereas the rotors are formed of one-piece 6AL-4V titanium.

FIGURES 3A-D are cross-sectional profiles ilustrating the configuration of, and spacing between the rotor and stator blades of the preferred embodiment illustrated in FIGURE 1. More specifically, FIGURE 3A illustrates the configuration of the first stator blades; FIGURE 2B illustrates the configuration of the first rotor blades; FIGURE 3C illustrates the configuration of the second stator blades; and, FIGURE 3D illustrates the configuration of the second rotor blades. The following sets forth the nomenclature used to define the configuration of the blades:

$\alpha$ = Entrance/exit angle of air into/out of stators

$\beta$ = Entrance/exit angle of air into/out of rotors

C = Length of chord

T = Blade thickness

Z = Number of blades

S = Blade spacing

$T_E$ = Trailing edge thickness

$d_{m1}$ = Distance between the mean points of the blades at the root

$d_{m2}$ = Distance between the mean points of the blades at the mean radial diameter

$d_{m3}$ = Distance between the mean points of the blades at the tip

$d_{t1}$ = Distance between the trailing edges of the blades at the root

$d_{t2}$ = Distance between the trailing edges of the blades at the mean radial

$d_{t3}$ = Distance between the trailing edges of the blades at the tip

$V_D$ = Vertical dimension of the blades

The first stator blades, illustrated in FIGURE 2A, are defined as follows:

$\alpha_1$ = 90 degrees

$\alpha_2$ = 23 degrees

C = 3.213 centimeters (1.265 inches)

T = 0.508 centimeters (.200 inches)

T/C = .158

Z = 38

$S_M$ = 1.259944 centimeters (.496041 inches)

$T_E$ = 0.0381 centimeters (.015 inches)

C/S = 2.55

$d_{m1}$ = 0.307 centimeters (.121 inches)

$d_{m2}$ = 0.40780 centimeters (.16055 inches)

$d_{m3}$ = 0.5067 centimeters (.1995 inches)

$d_{t1}$ = 0.3866 centimeters (.1522 inches)

$d_{t2}$ = 0.4541 centimeters (.1788 inches)

$d_{t3}$ = 0.50940 centimeters (.20055 inches)

$V_D$ = 2.248 centimeters (.885 inches)

The first rotor blades, with a reference to FIGURE 2B, are defined as follows:

$\beta_1$ = 40 degrees

$\beta_2$ = 36 degrees

C = 2.093 centimeters (.824 inches)

T = 0.432 centimeters (.170 inches)

$T/C = .206$

$Z = 47$

$S_M = 1.019912$ centimeters (.401054 inches)

$T_E = 0.038$ centimeters (.015 inches)

$C/S = 2.05$

$d_{t1} = 0.6645$ centimeters (.2616 inches)

$d_{t2} = 0.5606$ centimeters (.2207 inches)

$d_{t3} = 0.4562$ centimeters (.1796 inches)

$V_D = 2.083$ centimeters (.820 inches)

The second stator blades, with reference to FIGURE 2C, are defined as follows:

$\alpha_2 = 82$ degrees

$\alpha_3 = 35$ degrees

$C = 2.74066$ centimeters (1.079 inches)

$T = 0.394$ centimeters (.155 inches)

$T/C = .143$

$Z = 31$

$S_M = 2.740660$ centimeters (.538559 inches)

$T_E = 0.038$ centimeters (.015 inches)

$C/S = 2.00$

$d_{t1} = 0.5692$ centimeters (.2241 inches)

$d_{t2} = 0.932$ centimeters (.367 inches)

$d_{t3} = 0.9462$ centimeters (.3725 inches)

$V_D = 2.34315$ centimeters (.9225 inches)

The second rotor blades, with reference to FIGURE 2D, are defined as follows:

$\beta_3 = 69$ degrees

$\beta_4 = 45$ degrees

$C = 1.986$ centimeters (.782 inches)

$T = 0.2858$ centimeters (.1125 inches)

$Z = 43$

$S_M = 1.11343$ centimeters (.43836 inches)

$T_E = 0.038$ centimeters (.015 inches)

$C/S = 1.78$

$d_{t1} = 0.9939$ centimeters (.3909 inches)

$d_{t2} = 0.7894$ centimeters (.3108 inches)

$d_{t3} = 0.5857$ centimeters (.2306 inches)

$V_D = 1.9368$ centimeters (.7625 inches)

Typical spacing between the rotor and stator blades is 0.254 centimeters (.10 inches).

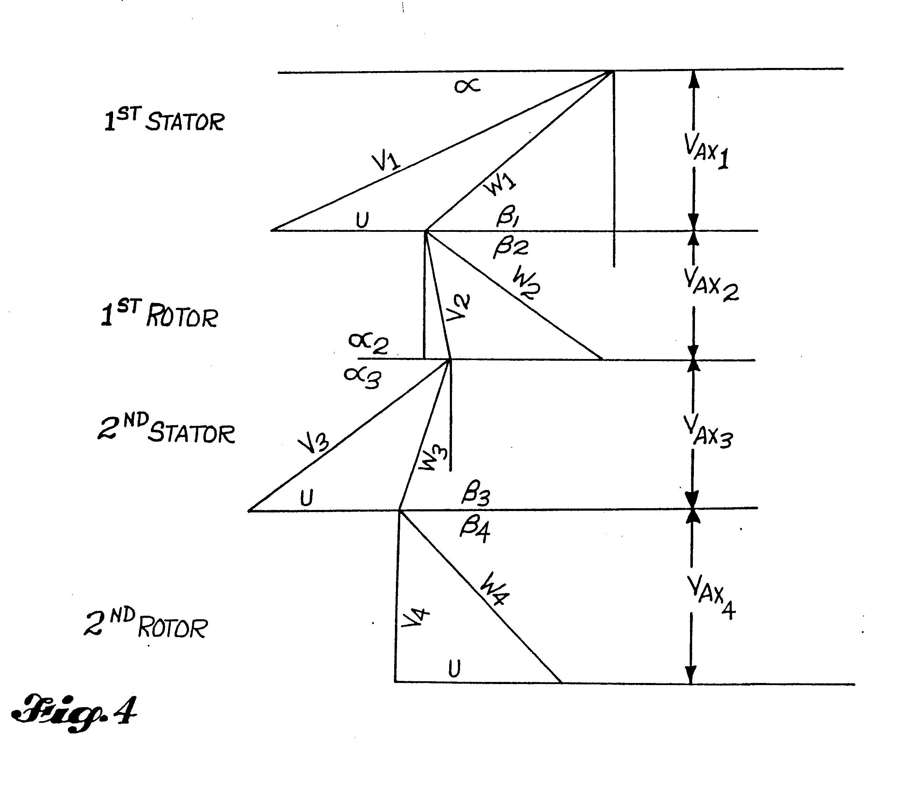

The entire two-stage turbine package, as defined with respect to FIGURE 3A -D, is 19.3 centimeters (7.6 inches) in diameter and 9.4 centimeters (3.7 inches) long. The efficiency of this turbine as tested was 83% compared to the 75.6% calculated from the mean velocity diagrams of FIGURE 4. This is accomplished by designing the first stator blades (FIGURE 3A) to provide supersonic exit velocities for the drive air which then impinges upon the highly loaded first rotor impulse blades. Approximately two-thirds of the power developed by the two-stage turbine is produced in this first stage. The second stage stator blades (FIGURE 3C) produce sonic exit velocities for the drive air which then impinges upon the second rotor - (FIGURE 3D) high reaction blades which act to extract the maximum amount of available energy from the drive air.

The defined blading for the two-stage turbine automatically adjusts the power split between the two stages to give high efficiency from low to maximum power.

Another important feature of this design is that the second stage acts to buffer the first stage from exhaust disturbances. Disturbances in the fluid flow out of the turbine, if not suitably buffered in the second stage, might produce a choking type shock wave in the first stage, thereby significantly reducing first stage efficiency.

A further particular feature of the design is illustrated in FIGURES 3A -D. Both the leading and trailing edges of each of the rotor and stator blades are elliptical in configuration. As such, each blade exhibits an efficient angle of attack to the impinging drive fluid over a broad range of drive fluid velocities. The present design is, therefore, more suitable for applications requiring a broad RPM range (such as the testing of propellers and fans for use in aircraft propulsion) than are numerous turbines known to the prior art which exhibit acceptable efficiency over only a narrow RPM range.

In addition, it should be noted that the tail sections of the stators are significantly extended to thereby precisely control the direction of drive airflow to the rotors, assuring high conversion efficiency.

FIGURE 4 is a vector diagram which illustrates velocities of the drive air and the rotors throughout the two-stage turbine at the mean blade position. The various entrance and exit angles $\alpha$ and $\beta$ are those as defined above with respect to FIGURE 3A -D. In FIGURE 4, the following definitions for the variables apply:

$V$ = Actual drive fluid velocity

$W$ = Relative velocity of gas with respect to the rotor

$U$ = Peripheral velocity of the rotor

$V_{AX}$ = The axial component of the drive gas velocity

With respect to the first stator portion:

$V_1$ = 1406.97 feet/second

$W_1$ = 921.10 feet/second

$U$ = 565.94 feet/second

$V_{AX1}$ = 578.98 feet/second
For the first rotor

$V_2$ = 478.95 feet/second

$W_2$ = 802.44 feet/second

$U$ = 565.94

$V_{AX2}$ = 471.66 feet/second
For the second stator:

$V_3$ = 946.64 feet/second

$W_3$ = 584.25 feet/second

$U$ = 565.94 feet/second

$V_{AX3}$ = 546.29 feet/second
For the second rotor:

$V_4$ = 663.267 feet/second

$W_4$ = 891.57 feet/second

$U$ = 565.94 feet/second

$V_{AX4}$ = 662.57 feet/second

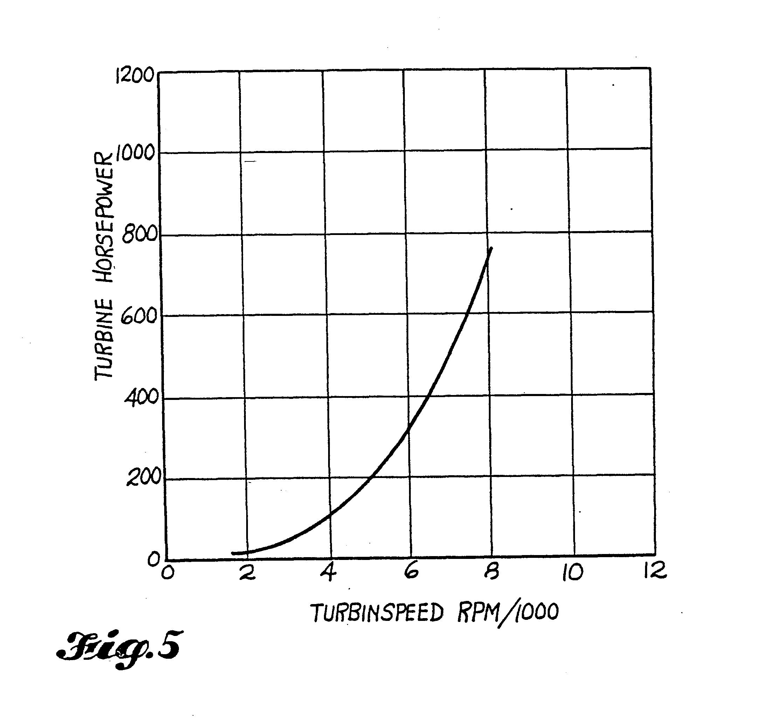

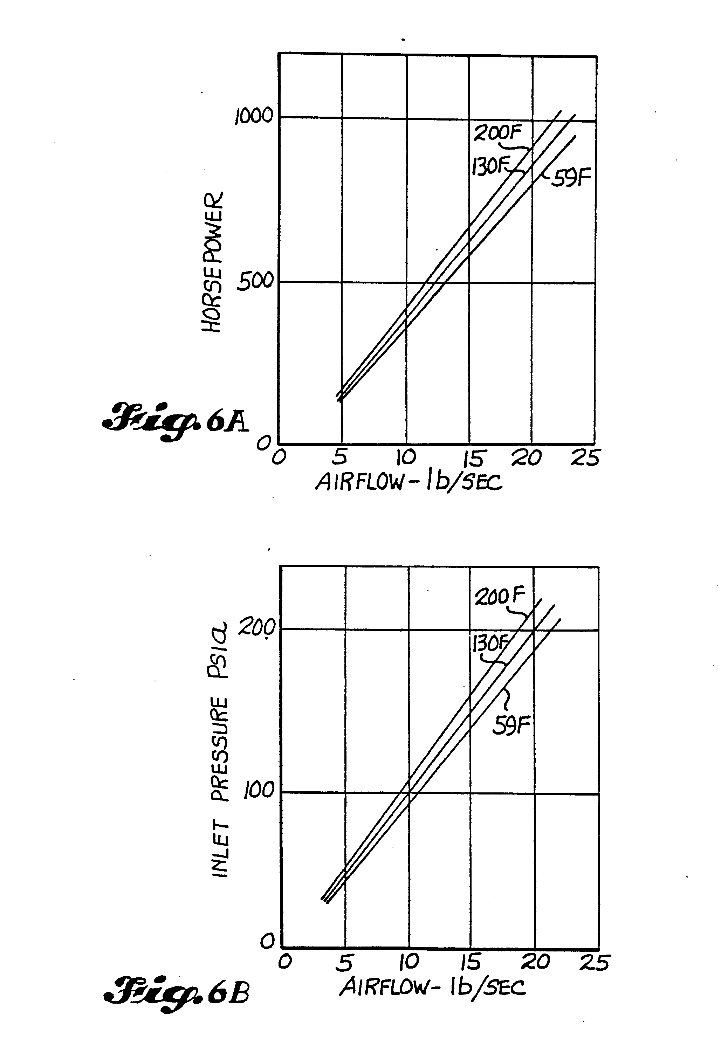

FIGURES 5, 6A and 6B are graphs illustrating the performance capabilities of the preferred embodiment of the two-stage turbine.

Referring to FIGURE 5, plotted is turbine horsepower vs. turbine RPM.

FIGURES 6A and 6B plot horsepower and inlet pressure, respectively, vs. the flow of the drive air for the indicated drive air temperatures.

It will be observed that the two-stage configuration of the present design exhibits a high output over a broad operating range.

The incorporation of elliptically shaped leading and trailing edges, combined with extending the pressure and suction surfaces at the trailing edges of impulse and reaction turbine blading, indicates that the increased instance angle tolerance is achieved with minimized exit flow angle deviation for transonic and subsonic turbine stages using untwisted blades operating with a hub-to-tip ratio of 0.69 to 0.59.

In addition to the above, interstage losses by the stators and rotors and carry-over losses by the impulse and reaction stages are optimized by untwisted blades, which allows minimizing the number of blades, and reducing axial clearances and bearing loads for cantilevered turbines.

A particular feature of the invention is the off-design point performance; e.g., obtaining high power at low turbine speed. This is done by providing an expansion area at the transonic nozzle exit that gives an increase in "spouting" velocity from the nozzle that increases first stage turbine torque to partially compensate for the higher loss percentage of total power at low RPM.

In summary, a method for increasing the first excitation mode of a rotor has been described in detail. The method employs the use of a shroud which is shrink fit into contacting arrangement with each tip of the rotor blades. The shroud not only raises the first excitation mode frequency of the rotor assembly, but it also may be used to create a pre-stress to the rotor, thereby minimizing rotor fatigue.

Whereas the preferred embodiment of the invention has been described in detail, it should be apparent that many modifications and variations thereto are possible, all of which fall within the true spirit and scope of the invention.

## Claims

1. A method for raising the first mode excitation frequency of a rotor, having an annular hub with a plurality of rotor blades projecting radially therefrom, above the operating range of said rotor, said method including the steps of:

a) providing a predeterminedly configured, single piece annular shroud, said shroud having a predetermined inner diameter adapted to be secured to the tips of said rotor blades; and

b) securing said shroud to said rotor such that said shroud contacts the tip of each of said rotor blades.

2. The method of claim 1 wherein:

step a) comprises the step of providing said shroud with an inner diameter predeterminedly less than the radius of said rotor blades with said shroud and rotor at the same temperature; and

step b) comprises the steps of:

i) heating said shroud to a predetermined temperature above the temperature of said rotor to thereby predeterminedly increase the inner diameter of said shroud,

ii) positioning said heated shroud in alignment about said rotor tips, and

iii) cooling said shroud to form a shrink fit between said shroud and said rotor.

3. The method of claim 2 wherein step a) further comprises the step of providing a recessed annular groove in the inner surface of said shroud, said recessed groove being of predetermined dimension to receive, and form said shrink fit with said rotor blades.

*Fig.1*

Fig. 2

*Fig.*3A

*Fig.*3B

*Fig.*3C

*Fig.*3D

Fig. 4

1ST STATOR

1ST ROTOR

2ND STATOR

2ND ROTOR

0 219 140

*Fig.5*

*Fig.* 6A

*Fig.* 6B